# FASCICULE DE BREVET EUROPEEN

(11) **EP 2 841 439 B1**
(45) Date de publication et mention de la délivrance du brevet: **03.08.2016**
(21) Numéro de dépôt: 13719456.9
(22) Date de dépôt: 19.04.2013
(51) Int. Cl.: C07F 9/40, H01M 6/16, H01M 10/052, H01M 10/0569

(54) **COMPOSITION POUR BATTERIE AU LITHIUM COMPRENANT AU MOINS UN COMPOSE FLUORE SPECIFIQUE COMME SOLVANT ORGANIQUE ET AU MOINS UN SEL DE LITHIUM**
ZUSAMMENSETZUNG FÜR EINE LITHIUMBATTERIE MIT MINDESTENS EINER BESTIMMTEN FLUORIERTEN VERBINDUNG ALS ORGANISCHES LÖSUNGSMITTEL UND MINDESTENS EINEM LITHIUMSALZ
COMPOSITION FOR A LITHIUM BATTERY INCLUDING AT LEAST ONE SPECIFIC FLUORINATED COMPOUND AS AN ORGANIC SOLVENT AND AT LEAST ONE LITHIUM SALT

(30) Priorité: 23.04.2012 FR 1253711
(43) Date de publication de la demande: 04.03.2015
(73) Titulaire: Commissariat à l'Énergie Atomique et aux Énergies Alternatives, 75015 Paris (FR)
(72) Inventeur: GALIANO, Hervé, F-37700 La Ville aux Dames (FR); BEORD, Charlotte, F-37550 Saint Avertin (FR); PIERRE, Nathalie, F-37260 Monts (FR); CADRA, Stéphane, F-37550 Saint Avertin (FR); AMEDURI, Bruno, F-34000 Montpellier (FR); ALAAEDDINE, Ali, Majdal Silim, Marjooun (LB); AJELLAL, Noureddine, FI-00970 Helsinki (FI)
(74) Mandataire: Brevalex
(86) Numéro de dépôt international: PCT/EP2013/058190
(87) Numéro de publication internationale: WO 2013/160206

(56) Documents cités:
- WO-A1-2011/051275
- SU ET AL: "Synthesis of fluorinated phosphonic, sulfonic, and mixed phosphonic/sulfonicacids", CANADIAN JOURNAL OF CHEMISTRY, NRC RESEARCH PRESS, CA, vol. 67, no. 11, 1 janvier 1989 (1989-01-01), pages 1795-1799, XP008082134, ISSN: 0008-4042, DOI: 10.1139/V89-278

## Description

### DOMAINE TECHNIQUE

La présente invention a trait à des compositions destinées en particulier à être utilisées comme électrolytes conducteurs d'ions lithium dans des batteries au lithium, lesdites compositions comprenant au moins un composé fluoré spécifique et au moins un sel de lithium, ledit composé fluoré pouvant remplir la fonction de solvant apte, en particulier, à permettre la dissolution de sels de lithium.

C'est donc ainsi tout naturellement que ces compositions peuvent trouver application dans le domaine des électrolytes, et notamment des électrolytes destinés à entrer dans la constitution des batteries au lithium.

Les batteries au lithium sont particulièrement intéressantes pour les domaines où l'autonomie est un critère primordial, tels que cela est le cas des domaines de l'informatique, de la vidéo, de la téléphonie mobile, des transports tels que les véhicules électriques, les véhicules hybrides, ou encore des domaines médicaux, spatiaux, de la microélectronique.

D'un point de vue fonctionnel, les batteries au lithium reposent sur le principe de l'intercalation-désintercalation du lithium au sein des matériaux constitutifs des électrodes des cellules électrochimiques de la batterie.

Plus précisément, la réaction à l'origine de la production de courant (c'est-à-dire lorsque la batterie est en mode de décharge) met en jeu le transfert, par l'intermédiaire d'un électrolyte conducteur d'ions lithium, de cations lithium provenant d'une électrode négative qui viennent s'intercaler dans le réseau accepteur de l'électrode positive, tandis que des électrons issus de la réaction à l'électrode négative vont alimenter le circuit extérieur, auquel sont reliées les électrode positive et négative.

Ces électrolytes peuvent consister en un mélange comprenant au moins un solvant organique et au moins un sel de lithium pour assurer la conduction desdits ions lithium, ce qui nécessite que le sel de lithium soit dissous dans ledit solvant organique.

Actuellement, les solvants organiques utilisés pour assurer cette fonction sont classiquement des solvants carbonates, tels que le carbonate d'éthylène, le carbonate de diméthyle, le carbonate de diéthyle.

Par ailleurs, le document WO 2011/051275 décrit des composés phosphonates fluorosubstitués spécifiques comme solvants d'électrolyte de batteries lithium-soufre et le document Canadian Journal of Chemistry, vol. 67, n°11, p.1795-1799 décrit des acides phosphoniques, sulfoniques et mixtes phosphoniques/sulfoniques fluorés mais dans des compositions ne comprenant pas de sel de lithium.

Les inventeurs de la présente invention se sont proposé de mettre au point de nouvelles compositions destinées à être utilisées comme électrolytes de batteries au lithium, comprenant au moins un composé qui présente les caractéristiques suivantes :
- une capacité à dissoudre facilement les sels de lithium ;
- une bonne stabilité électrochimique ;
- une bonne inertie thermique et chimique ; et
- une capacité à diminuer l'inflammabilité des électrolytes, dans lesquels ils sont incorporés.

### EXPOSÉ DE L'INVENTION

Ainsi, l'invention a trait à une composition comprenant :
- au moins un composé fluoré de formule (I) suivante : 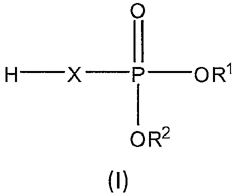 dans laquelle :
   *X correspond à un motif de formule (II) suivante : 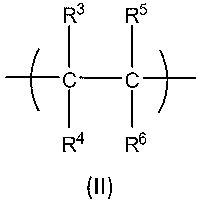
      ou à un enchaînement dudit motif de formule (II),
      dans laquelle R³, R⁴, R⁵ et R⁶ représentent, indépendamment l'un de l'autre, un atome d'halogène, un atome d'hydrogène, un groupe perfluoroalcoxy ou un groupe perfluoroalkyle, à condition que l'un au moins desdits R³, R⁴, R⁵ et R⁶ représente un atome de fluor, un groupe perfluoroalcoxy ou un groupe perfluoroalkyle ;
   *R¹ et R² représentent, indépendamment l'un de l'autre, un groupe alkyle ; et
      - au moins un sel de lithium.

Avant d'entrer plus en détail dans la description, nous précisons les définitions suivantes.

Par groupe alkyle, on entend, classiquement, dans ce qui précède et ce qui suit, un groupe alkyle, linéaire ou ramifié, de formule -CₙH₂ₙ₊₁, n correspondant au nombre d'atomes de carbone, ce nombre pouvant aller de 1 de 5. En particulier, il peut s'agir d'un groupe méthyle.

Par groupe perfluoroalcoxy, on entend, classiquement, dans ce qui précède et ce qui suit, un groupe -O-alkyle, dont tous les atomes d'hydrogène sont remplacés par des atomes de fluor, ce groupe répondant à la formule -O-CₙF₂ₙ₊₁, n correspondant au nombre d'atomes de carbone, ce nombre pouvant aller de 1 à 3. En particulier, il peut s'agir d'un groupe perfluorométhoxy -OCF₃.

Par groupe perfluoroalkyle, on entend, classiquement, dans ce qui précède et ce qui suit, un groupe alkyle, linéaire ou ramifié, de formule -CₙF₂ₙ₊₁, n correspondant au nombre d'atomes de carbone, ce nombre pouvant aller de 1 de 5. En particulier, il peut s'agir d'un groupe perfluorométhyle.

Par enchaînement dudit motif de formule (II), on entend le fait que ledit motif est répété plusieurs fois, de sorte à former un groupe formant pont entre l'atome d'hydrogène et le groupe -P(O)(OR¹)(OR²), ledit groupe formant pont pouvant ainsi être représenté par la formule (III) suivante : 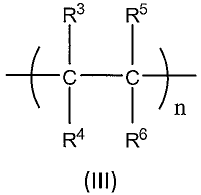 n correspondant au nombre de répétition du motif pris entre parenthèses, n étant un entier supérieur à 1.

Pour éviter toute ambiguïté, nous précisons enfin, de façon plus explicite que :
- lorsque X correspond à un motif de formule (II), les composés de l'invention peuvent être représentés par la formule chimique (IV) suivante : 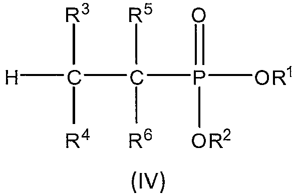
- lorsque X correspond à un enchaînement dudit motif de formule (II), les composés de l'invention peuvent être représentés par la formule chimique (V) suivante : 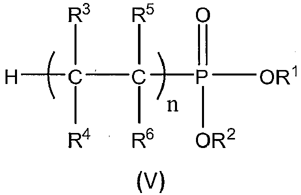 n correspondant au nombre de répétition du motif pris entre parenthèses, n étant supérieur à 1, par exemple, pouvant aller jusqu'à 10.

Selon un premier mode de réalisation particulier, au moins un des groupes R³ à R⁶ est un atome de fluor ou un groupe perfluoroalkyle et au moins un des groupes R³ à R⁶ est un atome d'hydrogène.

Ainsi, par exemple, R³ et R⁴ peuvent représenter un atome de fluor, tandis que R⁵ et R⁶ peuvent représenter un atome d'hydrogène.

Des composés conformes à l'invention et répondant à cette définition peuvent être des composés de formule (VI) suivante : 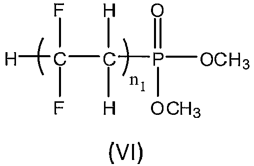 dans laquelle n₁ correspond au nombre de répétition du motif pris entre parenthèses, qui est un entier supérieur ou égal à 1.

En particulier, n₁ peut être un entier égal à 1 ou 2. Lorsque n₁ est un entier supérieur à 1 et inférieur à 30, on peut qualifier ce composé de composé télomère.

Selon un autre exemple, toujours selon ce premier mode de réalisation, R⁵, R⁶ et R³ peuvent représenter un atome d'hydrogène et R⁴ un groupe perfluoroalkyle, tel qu'un groupe perfluorométhyle.

Selon un deuxième mode de réalisation particulier de l'invention, au moins un des groupes R³ à R⁶ est un atome de fluor et au moins un des groupes R³ à R⁶ est un groupe perfluoroalcoxy, un groupe perfluoroalkyle ou un atome d'halogène autre qu'un atome de fluor.

Ainsi, par exemple, R³, R⁵ et R⁶ peuvent représenter un atome de fluor et R⁴ peut représenter un groupe perfluoroalcoxy, tel qu'un groupe perfluoromethoxy.

Des composés conformes à l'invention et répondant à cette définition peuvent être des composés de formule (VII) suivante : 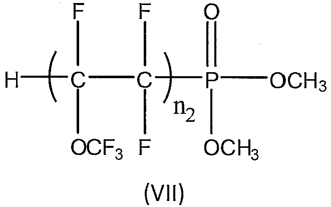 dans laquelle n₂ correspond au nombre de répétition du motif pris entre parenthèses, qui est un entier supérieur ou égal à 1.

En particulier, n₂ peut être un entier égal à 1 ou 2.

Lorsque n₂ est un entier supérieur à 1 et inférieur à 30, on peut qualifier ce composé de composé télomère.

Lesdits composés de formules (VII) peuvent coexister également dans un mélange avec des composés isomères de formule (VIII) suivante : 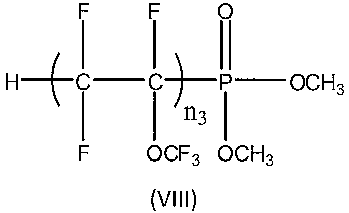 dans laquelle n₃ correspond au nombre de répétition du motif pris entre parenthèses, qui est un entier supérieur ou égal à 1.

Selon d'autres exemples, toujours selon le deuxième mode de réalisation :
- R³, R⁵ et R⁶ peuvent représenter un atome de fluor et R⁴ un groupe perfluoralkyle, tel qu'un groupe perfluorométhyle ; ou
- R³, R⁵ et R⁶ peuvent représenter un atome de fluor et R⁴ un atome de chlore.

Les composés fluorés destinés à entrer dans la constitution des compositions de l'invention peuvent être préparés par la mise en oeuvre d'un procédé comprenant une étape de mise en contact, en présence d'un amorceur de radicaux libres, d'un monomère de formule (IX) suivante : 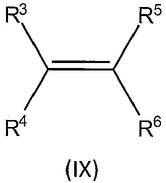 et d'un composé dialkylphosphite de formule (X) suivante : 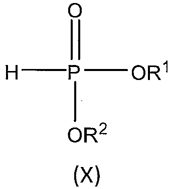 dans lesquelles R¹ à R⁶ sont tels que définis ci-dessus.

Un amorceur de radicaux libres efficace dans le cadre de ce procédé peut être choisi parmi les dérivés peroxydes, tels que le di-*tert*-butylperoxyde, le peroxyde de benzoyle, le peroxyde de *tert*-butyle, le 2,5-di-*tert*-butyldiméthylperoxyde d'hydrogène.

L'amorceur de radicaux libre peut être également choisi parmi les dérivés persulfates, les dérivés percarbonates, les peroxydicarbonates.

L'étape de mise en contact est réalisée, de préférence, en présence d'un solvant polaire aprotique, lequel peut être choisi parmi les solvants suivants :
- le diméthylformamide (symbolisé par l'abréviation DMF) ;
- l'acétonitrile ;
- le cyclohexane ;
- un solvant halogéné, tel que le 1,1,2-trifluoro-1,2,2-trichloroéthane, le 1,1,1,3,3-pentafluorobutane, le perfluorohexane, le perfluoroheptane, le perfluorobenzène, le perfluoro-1-butyltétrahydrofurane ;
- le tétrahydrofurane ;
- le butyronitrile ;
- la N-méthyl-2-pyrrolidone ;
- le carbonate de diméthyle ; et
- les mélanges de ceux-ci.

Dans le cas où le ou les monomères utilisés se présente(nt) sous forme gazeuse (ce qui est le cas notamment lorsque le monomère est le fluorure de vinylidène ou une oléfine fluorée en C₃) et que l'étape de mise en contact est réalisée sous pression, celle-ci peut être mise en oeuvre dans un autoclave.

Pour les monomères de formule (IX) susmentionnée, selon un premier cas, au moins un des groupes R³ à R⁶ est un atome de fluor ou un groupe perfluoroalkyle et au moins un des groupes R³ à R⁶ est un atome d'hydrogène.

Ainsi, par exemple, R³ et R⁴ peuvent représenter un atome de fluor, tandis que R⁵ et R⁶ peuvent représenter un atome d'hydrogène, auquel cas le monomère est le fluorure de vinylidène (connu sous l'abréviation VDF).

Ainsi, par exemple, R³, R⁵ et R⁶ peuvent représenter un atome d'hydrogène, tandis que R⁴ peut représenter un groupe perfluoroalkyle, tel qu'un groupe perfluorométhyle.

Pour les monomères de formule (IX) susmentionnée, selon un deuxième cas, au moins un des groupes R³ à R⁶ est un atome de fluor et au moins un des groupes R³ à R⁶ est un groupe perfluoroalcoxy, un groupe perfluoroalkyle ou un atome d'halogène autre qu'un atome de fluor.

Ainsi, par exemple, R³, R⁵ et R⁶ peuvent représenter un atome de fluor et R⁴ peut représenter un groupe perfluoroalcoxy, tel qu'un groupe perfluorométhoxy, auquel cas le monomère est le perfluorométhylvinyléther (connu sous l'abréviation PMVE).

Par exemple, R³, R⁵ et R⁶ peuvent représenter un atome de fluor et R⁴ peut représenter un groupe perfluoroalkyle, tel qu'un groupe perfluorométhyle, auquel cas le monomère est l'hexafluoropropène (connu sous l'abréviation HFP).

Par exemple, R³, R⁵ et R⁶ peuvent représenter un atome de fluor et R⁴ peut représenter un atome de chlore, auquel cas le monomère est le chlorotrifluoroéthylène (connu sous l'abréviation CTFE).

Pour les composés phosphites de formule (X) suivante, R¹ et R² peuvent correspondre à un groupe méthyle, auquel cas le composé est le phosphite de diméthyle (appelé également hydrogénophosphonate de diméthyle).

Après l'étape de mise en contact, le procédé peut comprendre une étape d'isolement du composé du milieu réactionnel, cette étape d'isolement pouvant consister en une distillation fractionnée du mélange réactionnel.

Les composés de formule (I) présentent, entre autres propriétés, une bonne capacité à solubiliser des sels de lithium.

C'est donc tout naturellement qu'ils trouvent leur application comme solvant organique pour au moins un sel de lithium, ce solvant organique entrant dans la constitution des compositions de l'invention, lesquelles peuvent être, ainsi, un électrolyte conducteur d'ions lithium.

Ainsi, l'invention a également trait à :
- l'utilisation d'un composé fluoré tel que défini ci-dessus comme solvant organique d'au moins un sel de lithium ; et
- une batterie au lithium comprenant au moins une cellule électrochimique comprenant un électrolyte tel que défini ci-dessus disposé entre une électrode positive et une électrode négative.

A titre d'exemples, le sel de lithium peut être choisi dans le groupe constitué par LiPF₆, LiClO₄, LiBF₄, LiAsF₆, LiCF₃SO₃, LiN(CF₃SO₂)₃, LiN(C₂F₅SO₂), le bistrifluorométhylsulfonylimide de lithium (connu sous l'abréviation LiTFSI) LiN[SO₂CF₃]₂ et les mélanges de ceux-ci.

Dans la batterie au lithium, l'électrolyte liquide susmentionné peut être amené, dans les cellules électrochimiques des batteries au lithium, à imprégner un séparateur, lequel est disposé entre l'électrode positive et l'électrode négative de la cellule électrochimique.

Ce séparateur peut être en un matériau poreux, tel qu'un matériau polymérique, apte à accueillir dans sa porosité l'électrolyte liquide.

Par électrode positive, on entend, classiquement, dans ce qui précède et ce qui suit, l'électrode qui fait office de cathode, quand le générateur débite du courant (c'est-à-dire lorsqu'il est en processus de décharge) et qui fait office d'anode lorsque le générateur est en processus de charge.

Par électrode négative, on entend, classiquement, dans ce qui précède et ce qui suit, l'électrode qui fait office d'anode, quand le générateur débite du courant (c'est-à-dire lorsqu'il est en processus de décharge) et qui fait office de cathode, lorsque le générateur est en processus de charge.

Généralement, l'électrode négative peut être à base d'un matériau carboné, tel que du graphite, et est le siège d'une réaction d'intercalation du lithium, en processus de charge.

L'électrode positive, quant à elle, peut être à base d'un oxyde de métal de transition lithié (le métal pouvant être, par exemple, du cobalt, du nickel, du manganèse) et est le siège d'une réaction de désintercalation du lithium, en processus de charge.

Parmi les composés de formule (I) entrant dans la constitution des compositions de l'invention, certains d'entre eux sont nouveaux et sont l'objet de l'invention, lesquels composés sont des composés spécifiques de formule (I) suivante : 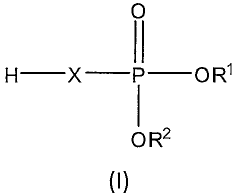 dans laquelle :
*X correspond à un motif de formule (II) suivante : 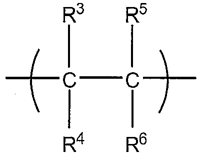 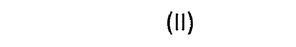 ou à un enchaînement dudit motif de formule (II),
   dans laquelle :
   - R³, R⁵ et R⁶ représentent un atome de fluor et R⁴ représente un groupe perfluoroalcoxy ;
   - R¹ et R² représentent, indépendamment l'un de l'autre, un groupe alkyle.

Des composés spécifiques entrant le cadre de la définition ci-dessus sont ceux répondant à la formule (VII) ci-dessus, et plus spécifiquement avec n₂ étant un entier égal à 1 ou 2.

L'invention va maintenant être décrite, en référence aux exemples suivants, donnés à titre indicatif et non limitatif.

### EXPOSÉ DÉTAILLÉ DE MODES DE RÉALISATION PARTICULIERS

### EXEMPLE 1

L'exemple qui suit illustre la préparation d'un composé fluoré selon le schéma réactionnel suivant : 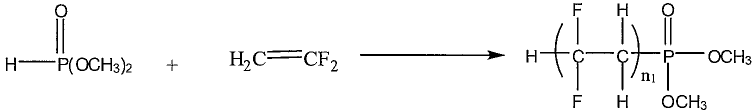 n₁ correspondant au nombre de répétition du motif pris entre parenthèses.

Dans l'exemple qui suit, les réactifs suivants ont été utilisés :
- le phosphite de diméthyle, qui est une solution commerciale technique fournie par Aldrich (98%) ;
- le peroxyde de di-*tert*-butyle, qui a été fourni par la société Akzo ;
- le fluorure de vinylidène, qui a été fourni par la société Solvay ;
- l'acétonitrile, qui est une solution commerciale technique (98%), distillée avant utilisation sur CaH₂.

La réaction susmentionnée est réalisée dans un autoclave de 600 mL Parr Hastelloy équipé d'un manomètre, d'un disque de rupture et de vannes de sortie. Un dispositif réglementé permet de contrôler à la fois l'agitation et le chauffage de l'autoclave.

Avant la réaction, l'autoclave est pressurisé à 30 bars d'azote pendant 1 heure pour vérifier l'étanchéité de celui-ci.

Une fois l'azote évacué, l'autoclave est placé sous vide pendant 40 minutes, puis le phosphite de diméthyle (176 g; 1,56 mol), le peroxyde de di-*tert*-butyle (1,17 g) et l'acétonitrile (80 g) y sont introduits. Avant d'introduire le fluorure de vinylidène, l'autoclave est refroidi à -55°C avec un mélange acétone/azote liquide. A -55°C, le réacteur est taré et connecté au tuyau d'arrivée du fluorure de vinylidène. Le fluorure de vinylidène est introduit par double pesée (47 g, 0,734 mol), c'est-à-dire par estimation de la différence de masse avant et après remplissage de l'autoclave avec le fluorure de vinylidène. L'autoclave est ensuite pesé, ce qui permet de mesurer la quantité exacte de fluorure de vinylidène introduit. L'autoclave est chauffé progressivement jusqu'à 140°C et l'évolution de la pression et de la température a été enregistrée. A 140°C, la pression avoisine 26 bars et 1h30 après le début de la réaction, à 140°C, la pression est passée de 26 bars à 3 bars. La réaction est stoppée après 5 heures et l'autoclave est placé dans un bain de glace.

L'autoclave est dégazé, pour relarguer le fluorure de vinylidène qui n'a pas réagi.

Le taux de conversion du fluorure de vinylidène a été déterminé par double pesée (44 g, 94%).

Ensuite, le mélange réactionnel brut est distillé sous vide (0,1-0,007 mbar), ce qui a permis d'isoler :
- une fraction correspondant à un composé de formule (XI) suivante : 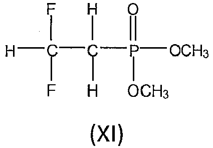 ce composé étant un monoadduit correspondant au 2,2-difluoroéthylphosphonate de diméthyle ;
- une fraction correspondant à un composé de formule (XII) suivante : 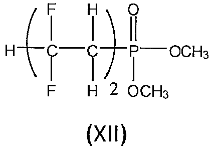 ce composé étant un diadduit correspondant au 2,2,4,4-tétrafluorobutylphosphonate de diméthyle ;
- une fraction correspondant à un mélange des composés de formules (XI) et (XII).

Le composé de formule (XI) a été récupéré à hauteur de 41 g (soit 69% de rendement), présente un point d'ébullition de 42-44°C (à 0,03 mbar) et un aspect de liquide incolore.

Il a été analysé respectivement par RMN ¹H, RMN ¹³C, RMN ³¹P ou GC/MS (chromatographie en phase gazeuse couplée à une spectrométrie de masse).

Le spectre RMN ¹H (CDCl₃, 20°C) du composé de formule (X) présente trois signaux :
- un triplet (²J_{HF}=50 Hz) de multiplets centré à 6,05 ppm attribué à l'hydrogène du groupe terminal difluorométhyle HCF₂ ;
- des doublets de multiplets situés à 3,75 ppm attribués aux hydrogènes des deux groupes méthyles de la fonction phosphonate ;
- un système complexe situé à 2,4 ppm attribué aux hydrogènes du groupe méthylène central lié au couplage avec le phosphore et les atomes de fluor.

Le spectre RMN ³¹P (CDCl₃, 20°C) présente un seul signal à 23 ppm sous forme d'un triplet avec une constante de couplage ²J_{PF}=30 Hz.

Le spectre RMN ¹⁹F (CDCl₃, 20°C) présente un seul signal à -110,2 ppm sous forme d'un doublet de doublets ²J_{FH}=49,5 Hz avec une constante de couplage ²J_{FH}=22 Hz.

Le composé a également été analysé par chromatographie en phase gazeuse couplé à une spectrométrie de masse, qui confirme la structure du monoadduit et permet la détermination de la masse molaire à 174 g/mol.

Le composé de formule (XII) a été récupéré à hauteur de 14,5 g (soit 25% de rendement), présente un point d'ébullition de 54-56°C (à 0,03 mbar) et un aspect de liquide incolore légèrement visqueux.

Il a été analysé respectivement par RMN ¹H, RMN ¹³C et RMN ³¹P et en GC/MS.

Le spectre RMN ¹H (CDCl₃, 20°C) du composé de formule (X) présente trois signaux :
- un triplet de multiplets centré à 6,0 ppm avec une constante de couplage ^{Z}J_{HF}=55,3 Hz attribué à l'hydrogène du groupe terminal difluorométhyle HCF₂ ;
- un doublet de multiplets situé à 3,75 ppm attribués aux hydrogènes des deux groupes méthyles de la fonction phosphonate ;
- un doublet de quadruplet situé à 2,5 ppm avec une constante de couplage ³J_{HF}=19,7 Hz attribué aux hydrogènes des groupes méthylènes-CH₂.

Le spectre RMN ³¹P (CDCl₃, 20°C) présente un seul signal à 22 ppm sous forme d'un triplet avec une constante de couplage ³J_{PF}=30 Hz.

Le spectre RMN ¹⁹F (CDCl₃, 20°C) présente deux signaux :
- un signal à -115 ppm sous forme de triplet correspondant à l'atome de fluor de l'extrémité HCF₂ ;
- un signal à -86,55 ppm sous forme d'un doublet de triplets attribuables aux atomes de fluor du groupe -CF₂- disposé entre les deux groupes méthylènes.

Le composé a également été analysé par chromatographie en phase gazeuse couplé à une spectrométrie de masse, qui confirme la structure du diadduit et permet la détermination de la masse molaire à 238 g/mol.

### EXEMPLE 2

L'exemple qui suit illustre la préparation d'un composé fluoré selon le schéma réactionnel suivant :

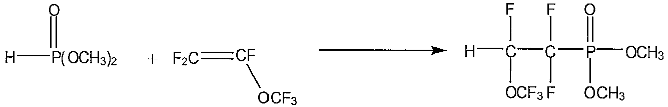

Dans l'exemple qui suit, les réactifs suivants ont été utilisés :
- le phosphite de diméthyle, qui est une solution commerciale technique fournie par Aldrich (98%) ;
- le peroxyde de di-*tert*-butyle, qui a été fourni par la société Akzo ;
- le perfluorométhylvinyléther (connu sous l'abréviation PMVE), qui a été fourni par Appolo;
- l'acétonitrile, qui est une solution commerciale technique (98%), distillée avant utilisation sur CaH₂.

La réaction susmentionnée est réalisée dans un autoclave de 300 mL Parr Hastelloy équipé d'un manomètre, d'un disque de rupture et de vannes d'introduction de gaz et de relargage. Un dispositif réglementé permet de contrôler à la fois l'agitation et le chauffage de l'autoclave.

Avant la réaction, l'autoclave est pressurisé à 30 bars d'azote pendant 1 heure pour vérifier l'étanchéité de celui-ci.

Une fois l'azote évacué, l'autoclave est placé sous vide pendant 40 minutes, puis le phosphite de diméthyle (36,44 g, 0,0331 mol), le peroxyde de di-*tert-*butyle (4,61 g, 0,0361 mmol) et l'acétonitrile (80 g) y sont introduits. Avant d'introduire le PMVE, l'autoclave est refroidi à -20°C avec un mélange acétone/azote liquide. Le PMVE est introduit par double pesée (50 g, 0,301 mol), c'est-à-dire par estimation de la différence de masse avant et après remplissage de l'autoclave avec le PMVE. L'autoclave est chauffé progressivement jusqu'à 140°C et l'évolution de la pression et de la température a été enregistrée. Au cours de la réaction, une augmentation de la pression à l'intérieur de l'autoclave est observée due au caractère exothermique de la réaction puis une diminution de celle-ci, provoquée par la transformation du PMVE en composé souhaité. A 140°C, la pression avoisine 21 bars et une heure après le début de la réaction, à 140°C, la pression est passée de 21 bars à 11 bars avec une température maintenue à 140°C. Après réaction et refroidissement, l'autoclave est laissé dans un bain de glace pendant 30 minutes puis dégazé.

La conversion du PMVE est déterminée par calcul du rapport m-δm/m, où m et δm désignent, respectivement, la masse de PMVE de départ et la différence de masse avant et après dégazage (δm=0 signifiant que le taux de conversion du PMVE est de 100%).

L'autoclave est dégazé, pour relarguer le PMVE qui n'a pas réagi.

Le taux de conversion du PMVE a été déterminé par double pesée (42,5 g, 85%).

Ensuite, le mélange réactionnel brut est distillé sous vide (0,03 mbar), ce qui a permis d'isoler différentes fraction. Une deuxième distillation du produit obtenu est réalisée pour isoler le composé souhaité (liquide incolore), qui est ensuite caractérisé par des techniques de spectroscopie RMN.

Les spectres RMN ¹H, RMN ¹⁹F et RMN ³¹P montrent clairement la présence de deux isomères :
- un isomère majoritaire (à 85%) correspondant au (3-oxa-1,1,2,4,4,4-hexafluorobutyl)phosphonate de diméthyle de formule (XIII) suivante : 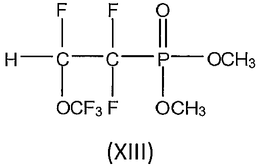
- un isomère minoritaire (à 15%) correspondant au (1,2,2-trifluoro)-1-(trifluorométhoxyéthyl)phosphonate de diméthyle de formule (XIV) suivante :

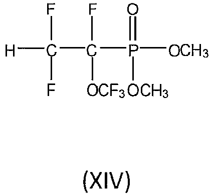

Le mélange de deux isomères est récupéré à hauteur de 28 g, présente une température d'ébullition de 44-46°C (à 0,03 mbar) et présente un aspect de liquide incolore.

## Revendications

1. Composition comprenant :
- au moins un composé fluoré de formule (I) suivante : 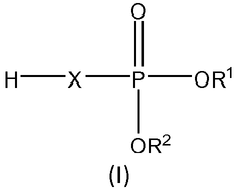 dans laquelle :
*X correspond à un motif de formule (II) suivante : 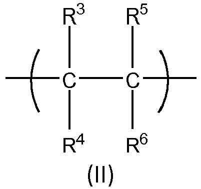
ou à un enchaînement dudit motif de formule (II),
dans laquelle R³, R⁴, R⁵ et R⁶ représentent, indépendamment l'un de l'autre, un atome d'halogène, un atome d'hydrogène, un groupe perfluoroalcoxy, un groupe perfluoroalkyle à condition que l'un au moins desdits R³, R⁴, R⁵ et R⁶ représente un atome de fluor, un groupe perfluoroalcoxy ou un groupe perfluoroalkyle ;
*R¹ et R² représentent, indépendamment l'un de l'autre, un groupe alkyle ; et
- au moins un sel de lithium.

2. Composition selon la revendication 1, dans laquelle au moins un des groupes R³ à R⁶ est un atome de fluor ou un groupe perfluoroalkyle et au moins un des groupes R³ à R⁶ est un atome d'hydrogène.

3. Composition selon la revendication 1 ou 2, dans laquelle R³ et R⁴ représentent un atome de fluor, tandis que R⁵ et R⁶ représentent un atome d'hydrogène.

4. Composition selon l'une quelconque des revendications précédentes, dans laquelle le composé fluoré répond à la formule (VI) suivante : 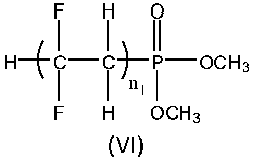 dans laquelle n₁ correspond au nombre de répétition du motif pris entre parenthèses, qui est un entier supérieur ou égal à 1.

5. Composition selon la revendication 4, dans laquelle n₁ est un entier égal à 1 ou 2.

6. Composition selon la revendication 1, dans laquelle au moins un des groupes R³ à R⁶ est un atome de fluor et au moins un des groupes R³ à R⁶ est un groupe perfluoroalcoxy, un groupe perfluoroalkyle ou un atome d'halogène autre que le fluor.

7. Composition selon la revendication 6, dans laquelle R³, R⁵ et R⁶ représentent un atome de fluor et R⁴ représente un groupe perfluoroalcoxy, tel qu'un groupe perfluoromethoxy.

8. Composition selon la revendication 7, dans laquelle le composé fluoré répond à la formule (VII) suivante : 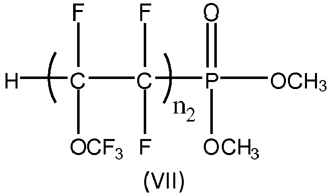 dans laquelle n₂ correspond au nombre de répétition du motif pris entre parenthèses, qui est un entier supérieur ou égal à 1.

9. Composition selon la revendication 8, dans laquelle n₂ est un entier égal à 1 ou 2.

10. Composition selon quelconque des revendications précédentes, qui est un électrolyte conducteur d'ions lithium.

11. Batterie au lithium comprenant au moins une cellule électrochimique comprenant un électrolyte tel que défini à la revendication 10 disposé entre une électrode positive et une électrode négative.

12. Utilisation d'un composé tel que défini selon l'une quelconque des revendications 1 à 10 comme solvant organique d'au moins un sel de lithium.

13. Composé de formule (I) suivante : 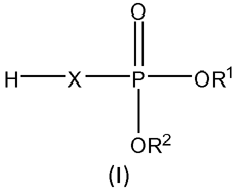 dans laquelle :
*X correspond à un motif de formule (II) suivante : 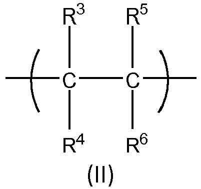 ou à un enchaînement dudit motif de formule (II), pour lequel :
- R³, R⁵ et R⁶ représentent un atome de fluor et R⁴ représente un groupe perfluoroalcoxy ;
- R¹ et R² représentent, indépendamment l'un de l'autre, un groupe alkyle.

14. Composé selon la revendication 13, dans laquelle le composé fluoré répond à la formule (VII) suivante : 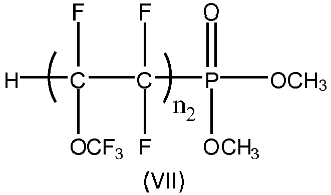 dans laquelle n₂ correspond au nombre de répétition du motif pris entre parenthèses, qui est un entier supérieur ou égal à 1.

15. Composé selon la revendication 14, dans lequel n₂ est un entier égal à 1 ou 2.

## Patentansprüche

1. Zusammensetzung, umfassend:
- mindestens eine fluorierte Verbindung der folgenden Formel (I): 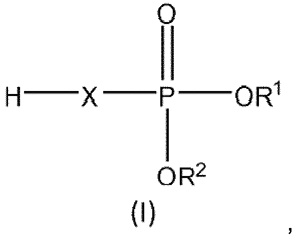 worin:
- X einer Einheit der folgenden Formel (II): 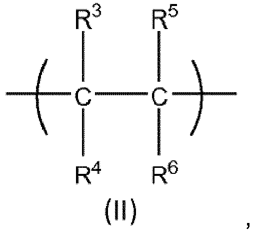 oder einer Kette der Einheit der Formel (II) entspricht:
worin R³, R⁴, R⁵ und R⁶ unabhängig voneinander ein Halogenatom, ein Wasserstoffatom, eine Perfluoralkoxygruppe, eine Perfluoralkylgruppe bedeuten, unter der Maßgabe, dass zumindest eines aus R³, R⁴, R⁵ und R⁶ ein Fluoratom, eine Perfluoralkoxygruppe oder eine Perfluoralkylgruppe bedeutet,
- R¹ und R² unabhängig voneinander eine Alkylgruppe bedeuten; und
- mindestens ein Lithiumsalz.

2. Zusammensetzung nach Anspruch 1, worin mindestens eine der Gruppen R³ bis R⁶ ein Fluoratom ist oder eine Gruppe Perfluoralkyl und mindestens eine der Gruppen R³ bis R⁶ ein Wasserstoffatom ist.

3. Zusammensetzung nach Anspruch 1 oder 2, worin R³ und R⁴ ein Fluoratom bedeuten, während R⁵ und R⁶ ein Wasserstoffatom bedeuten.

4. Verfahren nach einem der vorhergehenden Ansprüche, worin die fluorierte Verbindung der folgenden Formel (VI) entspricht: 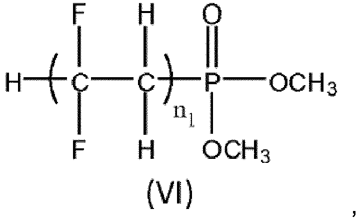 worin n₁ der Wiederholungszahl der Einheit zwischen den Klammern entspricht, wobei es eine ganze Zahl größer oder gleich 1 ist.

5. Zusammensetzung nach Anspruch 4, worin n₁ eine ganze Zahl gleich 1 oder 2 ist.

6. Zusammensetzung nach Anspruch 1, worin mindestens eine der Gruppen R³ bis R⁶ ein Fluoratom ist und mindestens eine der Gruppen R³ bis R⁶ eine Perfluoralkoxygruppe, eine Perfluoralkylgruppe oder ein von Fluor verschiedenes Halogenatom ist.

7. Zusammensetzung nach Anspruch 6, worin R³, R⁵ und R⁶ ein Fluoratom bedeuten und R⁴ eine Perfluoralkoxygruppe bedeutet, wie z.B. eine Perfluormethoxygruppe

8. Zusammensetzung nach Anspruch 7, worin die fluorierte Verbindung der folgenden Formel (VII) entspricht: 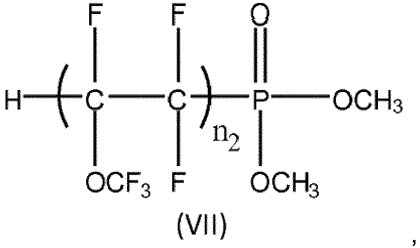 worin n₂ der Wiederholungszahl der Einheit zwischen den Klammern entspricht, wobei es eine ganze Zahl größer oder gleich 1 ist.

9. Zusammensetzung nach Anspruch 8, worin n₂ eine ganze Zahl gleich 1 oder 2 ist.

10. Zusammensetzung nach einem der vorhergehenden Ansprüche, die ein leitfähiger Elektrolyt für Lithiumionen ist.

11. Lithiumbatterie, umfassend mindestens eine elektrochemische Zelle, umfassend einen Elektrolyt, wie in Anspruch 10 definiert, angeordnet zwischen einer positiven Elektrode und einer negativen Elektrode.

12. Verwendung einer Verbindung nach einem der Ansprüche 1 bis 10 als organisches Lösungsmittel für mindestens ein Lithiumsalz.

13. Verbindung der folgenden Formel (I): 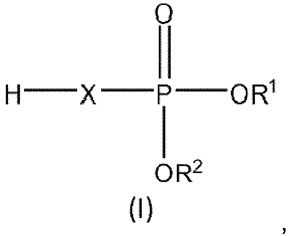 worin:
- X einer Einheit der folgenden Formel (II): 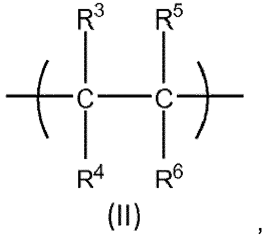 oder einer Kette der Einheit der Formel (II) entspricht,
worin:
- R³, R⁵ und R⁶ ein Fluoratom bedeuten und R⁴ eine Perfluoralkoxygruppe bedeutet;
- R¹ und R² unabhängig voneinander eine Alkylgruppe bedeuten.

14. Verbindung nach Anspruch 13, worin die fluorierte Verbindung der folgenden Formel (VII) entspricht: 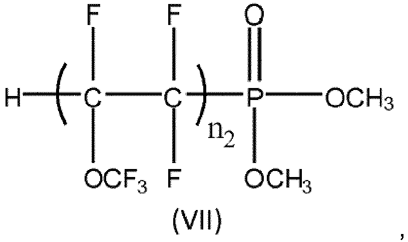 worin n₂ der Wiederholungszahl der Einheit zwischen den Klammern entspricht, wobei es eine ganze Zahl größer oder gleich 1 ist.

15. Verbindung nach Anspruch 14, worin n₂ eine ganze Zahl gleich 1 oder 2 ist.

## Claims

1. Composition comprising:
- at least one fluorinated compound of the following formula (I): 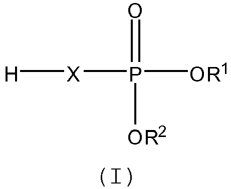 wherein:
* X corresponds to a unit of the following formula (II): 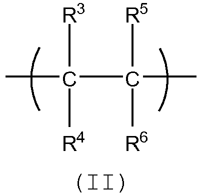
or to a sequence of said unit of formula (II),
wherein R³, R⁴, R⁵ et R⁶ represent, independently of each other, a halogen atom, a hydrogen atom, a perfluoroalkoxy group, a perfluoroalkyl group provided that at least one of said R³, R⁴, R⁵ and R⁶ represents a fluorine atom, a perfluoroalkoxy group or a perfluoroalkyl group;
* R¹ and R² represents, independently of each other, an alkyl group; and
- at least one lithium salt.

2. The composition according to claim 1, wherein at least one of the groups R³ to R⁶ is a fluorine atom or a perfluoroalkyl group and at least one of the groups R³ to R⁶ is a hydrogen atom.

3. The composition according to claim 1 or 2, wherein R³ and R⁴ represent a fluorine atom, while R⁵ and R⁶ represent a hydrogen atom.

4. The composition according to any of the preceding claims, wherein the fluorinated compound fits the following formula (VI): 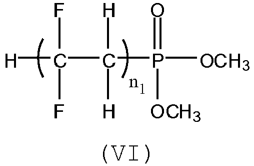 wherein n₁ corresponds to the number of repetitions of the unit taken between brackets, which is an integer greater than or equal to 1.

5. The composition according to claim 4, wherein n₁ is an integer equal to 1 or 2.

6. The composition according to claim 1, wherein at least one of the groups R³ to R⁶ is a fluorine atom and at least one of the groups R³ to R⁶ is a perfluoroalkoxy group, a perfluoroalkyl group or a halogen atom other than fluorine.

7. The composition according to claim 6, wherein R³, R⁵ and R⁶ represent a fluorine atom and R⁴ represents a perfluoroalkoxy group, such as a perfluoromethoxy group.

8. The composition according to claim 7, wherein the fluorinated compound fits the following formula (VII): 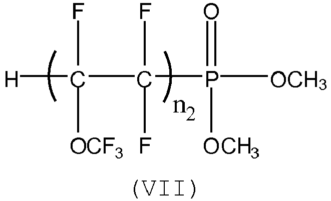 wherein n₂ corresponds to the number of repetitions of the unit taken between brackets, which is an integer greater or equal to 1.

9. The composition according to claim 8, wherein n₂ is an integer equal to 1 or 2.

10. The composition according to any of the preceding claims, which is an electrolyte conducting lithium ions.

11. A lithium battery comprising at least one electrochemical cell comprising an electrolyte as defined in claim 10, positioned between a positive electrode and a negative electrode.

12. The use of a compound as defined according to any of claims 1 to 10 as an organic solvent of at least one lithium salt.

13. A compound of the following formula (I) : 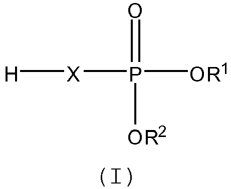 wherein
* X corresponds to a unit of the following formula (II): 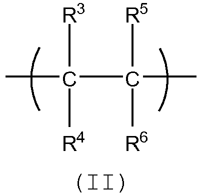 or to a sequence of said unit of formula (II),
for which:
- R³, R⁵ and R⁶ represent a fluorine atom and R⁴ represents a perfluoroalkoxy group;
- R¹ and R² represent, independently of each other, an alkyl group.

14. The compound according to claim 13, wherein the fluorinated compound fits the following formula (VII): 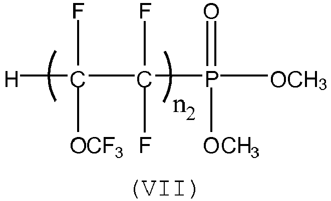 wherein n₂ corresponds to the number of repetitions of the unit taken between brackets, which is an integer greater than or equal to 1.

15. The compound according to claim 14, wherein n₂ is an integer equal to 1 or 2.
